# EUROPEAN PATENT APPLICATION

(11) **EP 4 578 740 A1**
(43) Date of publication of application: **02.07.2025**
(21) Application number: 24795884.6
(22) Date of filing: 15.04.2024
(51) Int. Cl.: B60R 11/04, B60R 1/28, B60R 1/06

(54) **IMAGE COLLECTION APPARATUS, CONTROL METHOD FOR IMAGE COLLECTION APPARATUS, AND VEHICLE**

(30) Priority: 27.04.2023 CN 202310469916
(71) Applicant: Chery Automobile Co., Ltd., Wuhu, Anhui 241006 (CN); Wuhu Automobile Advanced Technology Institute, Wuhu, Anhui 241006 (CN)
(72) Inventor: HE, Keqin, Wuhu, Anhui 241006 (CN); REN, Heng, Wuhu, Anhui 241006 (CN); CHANG, Linlin, Wuhu, Anhui 241006 (CN); HUANG, Yong, Wuhu, Anhui 241006 (CN)
(74) Representative: Yang, Shu
(86) International application number: PCT/CN2024/087739
(87) International publication number: WO 2024/222503

(57) **Abstract**

The present disclosure belongs to the technical field of vehicles. Disclosed are an image collection apparatus, a control method for the image collection apparatus, and a vehicle. The apparatus comprises a first image collector, a second image collector, a first rotating mechanism and a second rotating mechanism. The first image collector is mounted outside a left side of a vehicle body, and the first image collector is connected to the first rotating mechanism, wherein the first rotating mechanism is used for adjusting the orientation of the first image collector to be switched between an area on a left rear side of a vehicle and an area on a left side of the vehicle. The second image collector is mounted outside a right side of the vehicle body, and the second image collector is connected to the second rotating mechanism, wherein the second rotating mechanism is used for adjusting the orientation of the second image collector to be switched between an area on a right rear side of the vehicle and an area on a right side of the vehicle. By using the technical solutions provided in the embodiments of the present disclosure, the space occupied by a vehicle can be reduced, and the manufacturing costs of the vehicle can also be reduced.

## Description

This application claims priority to Chinese Patent Application No. 202310469916.0, filed on April 27, 2023, and entitled "IMAGE COLLECTION APPARATUS, CONTROL METHOD FOR IMAGE COLLECTION APPARATUS, AND VEHICLE", the contents of which are incorporated herein by reference in its entirety.

### TECHNICAL FIELD

The present disclosure relates to the field of vehicle technology, and in particular relates to an image acquisition device, a method for controlling the image acquisition device, and a vehicle.

### BACKGROUND

Conventional rearview mirrors are prone to creating visual blind spots for a driver, leading to dangerous driving situations. Electronic exterior mirrors provide a view of multiple lanes to make a vehicle owner no longer be affected by the visual blind spots caused by factors such as the curvature, shape, size, and angle of the conventional rearview mirrors. As a result, an increasing number of manufacturers are replacing conventional rearview mirrors with electronic exterior mirrors to enhance driving safety.

In the related art, to enable the driver to keep track of the conditions around the vehicle, it is common to install left and right electronic exterior mirrors on the vehicle to observe the conditions at the left rear and right rear of the vehicle. At the same time, multiple 360-degree panoramic cameras are also mounted on the vehicle. By viewing the images captured by these cameras, the driver keeps track of the conditions around the vehicle. However, the use of multiple cameras not only occupies excessive space on the vehicle but also increases the manufacturing cost of the vehicle.

### SUMMARY

In view of this, embodiments of the present disclosure provide an image acquisition device, a method for controlling an image acquisition device, and a vehicle, which not only reduces the space occupied by the vehicle, but also reduces the manufacturing cost of the vehicle.

In one aspect, an image acquisition device is provided in some embodiments of the present disclosure. The image acquisition device includes a first image collector, a second image collector, a first rotatable mechanism, and a second rotatable mechanism;
the first image collector is mounted on a left-side exterior of a vehicle body and connected to the first rotatable mechanism, the first rotatable mechanism being configured to adjust an orientation of the first image collector to switch between a left-rear region of a vehicle and a left-side region of the vehicle; and
the second image collector is mounted on a right-side exterior of the vehicle body and connected to the second rotatable mechanism, the second rotatable mechanism being configured to adjust an orientation of the second image collector to switch between a right-rear region of the vehicle and a right-side region of the vehicle.

In some embodiments, the image acquisition device further includes a first display screen, a second display screen, and a third display screen;
the first display screen is in signal communication with the first image collector and is used to display an image captured by the first image collector in a case where the first image collector is oriented toward the left-rear region of the vehicle;
the second display screen is in signal communication with the second image collector and is used to display an image captured by the second image collector in a case where the first image collector is oriented toward the right-rear region of the vehicle; and
the third display screen is in signal communication with the first image collector and the second image collector, respectively, and is used to display an image captured by the first image collector in a case where the first image collector is oriented toward the left-side region of the vehicle and/or display an image captured by the second image collector in a case where the second image collector is oriented toward the right-side region of the vehicle.

In some embodiments, the first display screen, the second display screen, and the third display screen are mounted inside the vehicle; wherein
the first display screen is disposed in a left-side area of a driver;
the second display screen is disposed in a right-side area of the driver; and
the third display screen is disposed in a center control area of the vehicle.

In another aspect, a method for controlling an image acquisition device is provided in some embodiments of the present disclosure. The method is applicable to a controller. The image acquisition device includes: a first image collector, a second image collector, a first rotatable mechanism, and a second rotatable mechanism; wherein the first image collector is mounted on a left-side exterior of a vehicle body and connected to the first rotatable mechanism, the first rotatable mechanism being configured to adjust an orientation of the first image collector to switch between a left-rear region of a vehicle and a left-side region of the vehicle; and the second image collector is mounted on a right-side exterior of the vehicle body and connected to the second rotatable mechanism, the second rotatable mechanism being configured to adjust an orientation of the second image collector to switch between a right-rear region of the vehicle and a right-side region of the vehicle;
the controller is in signal communication with the first rotatable mechanism and the second rotatable mechanism, respectively, and the method includes:
the controller acquiring a vehicle state, generating a target rotation instruction based on the vehicle state, and sending the target rotation instruction to the first rotatable mechanism and/or the second rotatable mechanism;
the first rotatable mechanism rotating to a first target position or a second target position based on the target rotation instruction, wherein the first image collector is oriented toward the left-rear region of the vehicle in a case where the first rotatable mechanism rotates to the first target position, and the first image collector is oriented toward the left-side region of the vehicle in a case where the first rotatable mechanism rotates to the second target position; and
the second rotatable mechanism rotating to a third target position or a fourth target position based on the target rotation instruction, wherein the second image collector is oriented toward the right-rear region of the vehicle in a case where the second rotatable mechanism rotates to the third target position, and the second image collector is oriented toward the right-side region of the vehicle in a case where the second rotatable mechanism rotates to the fourth target position.

In some embodiments, the vehicle state includes a running speed of the vehicle, and the controller generating the target rotation instruction based on the vehicle state includes:
the controller acquiring the running speed;
the controller generating a first rotation instruction in response to the running speed being greater than a speed threshold, wherein the first rotation instruction is used to instruct the first rotatable mechanism to rotate to the first target position and/or instruct the second rotatable mechanism to rotate to the third target position; or
the controller generating a second rotation instruction in response to the running speed being less than or equal to the speed threshold, wherein the second rotation instruction is used to instruct the first rotatable mechanism to rotate to the second target position and/or instruct the second rotatable mechanism to rotate to the fourth target position.

In some embodiments, the vehicle state includes a steering angle of the vehicle, and the controller generating the target rotation instruction based on the vehicle state includes:
the controller generating a third rotation instruction in response to the steering angle being less than a rotation threshold, wherein the third rotation instruction is used to instruct the first rotatable mechanism to rotate to the first target position and/or instruct the second rotatable mechanism to rotate to the third target position; or
the controller generating a fourth rotation instruction in response to the steering angle being greater than the rotation threshold, wherein the fourth rotation instruction is used to instruct the first rotatable mechanism to rotate to the second target position and/or instruct the second rotatable mechanism to rotate to the fourth target position.

In some embodiments, the controller generating the target rotation instruction based on the vehicle state includes:
the controller generating a fifth rotation instruction in response to the vehicle being in a reversing state, wherein the fifth rotation instruction is used to instruct the first rotatable mechanism to rotate to the second target position and/or instruct the second rotatable mechanism to rotate to the fourth target position.

In some embodiments, the controller generating the target rotation instruction based on the vehicle state includes:
the controller generating a sixth rotation instruction in response to the vehicle being in a state immediately after startup, wherein the sixth rotation instruction is used to instruct the first rotatable mechanism to rotate to the first target position and/or instruct the second rotatable mechanism to rotate to the third target position.

In some embodiments, the method further includes:
a first display screen displaying an image captured by the first image collector in response to the first rotatable mechanism rotating to the first target position; and
a second display screen displaying an image captured by the second image collector in response to the second rotatable mechanism rotating to the third target position.

In another aspect, a vehicle is provided in some embodiments of the present disclosure. The vehicle includes an image acquisition device and a controller configured to control the image acquisition device.

The image acquisition device includes a first image collector, a second image collector, a first rotatable mechanism, and a second rotatable mechanism; wherein the first image collector is mounted on a left-side exterior of a vehicle body and connected to the first rotatable mechanism, the first rotatable mechanism being configured to adjust an orientation of the first image collector to switch between a left-rear region of a vehicle and a left-side region of the vehicle; and the second image collector is mounted on a right-side exterior of the vehicle body and connected to the second rotatable mechanism, the second rotatable mechanism being configured to adjust an orientation of the second image collector to switch between a right-rear region of the vehicle and a right-side region of the vehicle.

In some embodiments, the image acquisition device further includes a first display screen, a second display screen, and a third display screen;
the first display screen is in signal communication with the first image collector and is used to display an image captured by the first image collector in a case where the first image collector is oriented toward the left-rear region of the vehicle;
the second display screen is in signal communication with the second image collector and is used to display an image captured by the second image collector in a case where the first image collector is oriented toward the right-rear region of the vehicle; and
the third display screen is in signal communication with the first image collector and the second image collector, respectively, and is used to display an image captured by the first image collector in a case where the first image collector is oriented toward the left-side region of the vehicle and/or an image captured by the second image collector in a case where the second image collector is oriented toward the right-side region of the vehicle.

In some embodiments, the first display screen, the second display screen, and the third display screen are mounted inside the vehicle; wherein
the first display screen is disposed in a left-side area of a driver;
the second display screen is disposed in a right-side area of the driver; and
the third display screen is disposed in a center control area of the vehicle.

In some embodiments, the controller is configured to acquire a vehicle state, generate a target rotation instruction based on the vehicle state, and send the target rotation instruction to the first rotatable mechanism and/or the second rotatable mechanism;
the first rotatable mechanism is configured to rotate to a first target position or a second target position based on the target rotation instruction, wherein the first image collector is oriented toward the left-rear region of the vehicle in a case where the first rotatable mechanism rotates to the first target position, and the first image collector is oriented toward the left-side region of the vehicle in a case where the first rotatable mechanism rotates to the second target position; and
the second rotatable mechanism is configured to rotate to a third target position or a fourth target position based on the target rotation instruction, wherein the second image collector is oriented toward the right-rear region of the vehicle in a case where the second rotatable mechanism rotates to the third target position, and the second image collector is oriented toward the right-side region of the vehicle in a case where the second rotatable mechanism rotates to the fourth target position.

In some embodiments, the vehicle state includes an running speed of the vehicle, the controller is further configured to:
acquire the running speed;
generate a first rotation instruction in response to the running speed being greater than a speed threshold, wherein the first rotation instruction is used to instruct the first rotatable mechanism to rotate to the first target position and/or instruct the second rotatable mechanism to rotate to the third target position; or
generate a second rotation instruction in response to the running speed being less than or equal to the speed threshold, wherein the second rotation instruction is used to instruct the first rotatable mechanism to rotate to the second target position and/or instruct the second rotatable mechanism to rotate to the fourth target position.

In some embodiments, the vehicle state includes a steering angle of the vehicle, and the controller is further configured to:
generate a third rotation instruction in response to the steering angle being less than a rotation threshold, wherein the third rotation instruction is used to instruct the first rotatable mechanism to rotate to the first target position and/or instruct the second rotatable mechanism to rotate to the third target position; or
generate a fourth rotation instruction in response to the steering angle being greater than the rotation threshold, wherein the fourth rotation instruction is used to instruct the first rotatable mechanism to rotate to the second target position and/or instruct the second rotatable mechanism to rotate to the fourth target position.

The image acquisition device provided by the embodiments of the present disclosure includes a first image collector, a second image collector, a first rotatable mechanism, and a second rotatable mechanism. The first image collector is mounted on the left-side exterior of the vehicle body and is connected to the first rotatable mechanism. The first rotatable mechanism is used to adjust the orientation of the first image collector to switch between the left-rear region of the vehicle and the left-side region of the vehicle. In this way, the first image collector is capable of providing the driver with the image of the left-rear region of the vehicle as well as the image of the left-side region of the vehicle. The second image collector is mounted on the right-side exterior of the vehicle body and is connected to the second rotatable mechanism. The second rotatable mechanism is used to adjust the orientation of the second image collector to switch between the right-rear region of the vehicle and the right-side region of the vehicle. In this way, the second image collector is capable of providing the driver with the image of the right-rear region of the vehicle as well as the image of the right-side region of the vehicle. In other words, the image acquisition device acquires images from multiple angles around the vehicle by utilizing only two image collectors, and since the number of image collectors is less, it not only occupies less space on the vehicle but also reduces the manufacturing cost of the vehicle.

### BRIEF DESCRIPTION OF THE DRAWINGS

To describe technical solutions in the embodiments of the present disclosure more clearly, the following briefly introduces the accompanying drawings required for describing the embodiments. Apparently, the accompanying drawings in the following description illustrate merely some embodiments of the present disclosure, and a person of ordinary skill in the art may still derive other drawings from these accompanying drawings without creative efforts.
FIG. 1 is a schematic diagram of a first image collector oriented towards a left-rear region to capture an image in an image acquisition device according to some embodiments of the present disclosure;
FIG. 2 is a schematic diagram of a first image collector oriented towards a left-side region to capture an image in an image acquisition device according to some embodiments of the present disclosure;
FIG. 3 is a flowchart of a method for controlling an image acquisition device according to some embodiments of the present disclosure; and
FIG. 4 is a flowchart of another method for controlling an image acquisition device according to some embodiments of the present disclosure;

### References:

100-First image collector;
α -first angular range;
β -second angular range.

Specific embodiments of the present disclosure have been shown by means of the above-described accompanying drawings, which will be described in greater detail later. These accompanying drawings and written descriptions are not intended to limit the scope of the present disclosure in any way, but rather to explain the concepts of the present disclosure for those skilled in the art by reference to specific embodiments.

### DETAILED DESCRIPTION

The technical solutions in the embodiments of the present disclosure will be described clearly and completely in the following in conjunction with the accompanying drawings in the embodiments of the present disclosure. Obviously, the described embodiments are some, rather than all, of the embodiments of the present disclosure. Based on the embodiments in the present disclosure, all other embodiments obtained by a person of ordinary skill in the art without creative efforts shall fall within the scope of protection of the present disclosure.

Unless otherwise defined, all technical terms used in the embodiments of this disclosure have the same meaning as commonly understood by those skilled in the art.

To make the technical solutions and advantages of the present disclosure clearer, the embodiments of the present disclosure will be described in further detail below with reference to the accompanying drawings.

Embodiments of the present disclosure provide an image acquisition device. The image acquisition device includes a first image collector, a second image collector, a first rotatable mechanism and a second rotatable mechanism. It should be noted that the first image collector and the second image collector are cameras. The first rotatable mechanism is connected to a seat body of the first image collector, and the second rotatable mechanism is connected to a seat body of the second image collector.

The first image collector is mounted on the left-side exterior of the vehicle body and connected to the first rotatable mechanism, wherein the first rotatable mechanism is configured to adjust the orientation of the first image collector to switch between the left-rear region of the vehicle and the left-side region of the vehicle. Thereby, the first image collector is capable of providing the driver with an image of the left-rear region of the vehicle as well as an image of the left-side region of the vehicle.

The second image collector is mounted on the right-side exterior of the vehicle body and connected to the second rotatable mechanism, wherein the second rotatable mechanism is configured to adjust the orientation of the second image collector to switch between the right-rear region of the vehicle and the right-side region of the vehicle. Thereby, the second image collector is capable of providing the driver with an image of the right-rear region of the vehicle as well as an image of the right-side region of the vehicle.

The image acquisition device provided by the embodiments of the present disclosure acquires images from multiple angles around the vehicle by utilizing only two image collectors, and since the number of image collectors is less, it not only occupies less space in the vehicle, but also reduces the manufacturing cost of the vehicle.

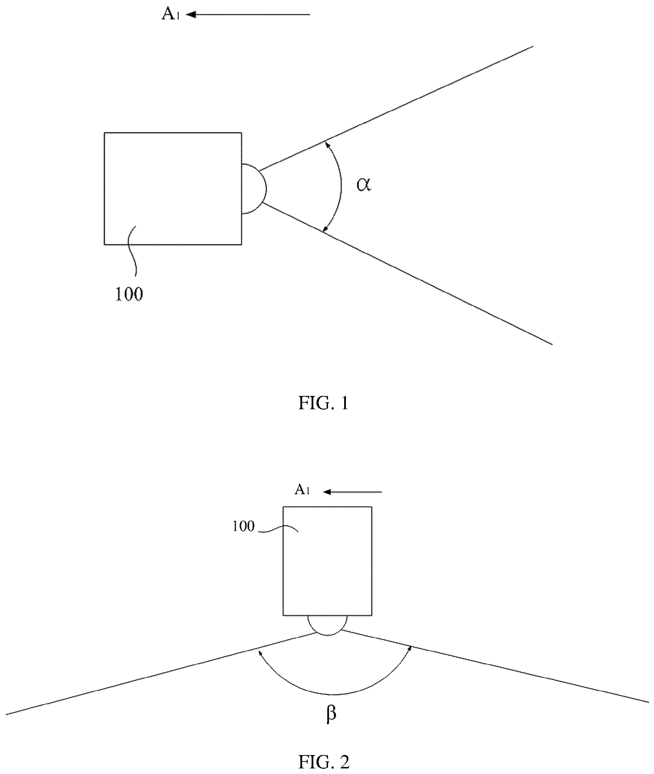

The details and functions of the image acquisition device provided by the embodiments of the present disclosure are described in more specific detail below in conjunction with FIGS. 1 and 2.

As shown in FIG. 1, in some embodiments, when the first rotatable mechanism adjusts the first image collector 100 to face the left-rear region of the vehicle, the first image collector 100 acquires images within a first angular range α . As shown in FIG. 2, in some embodiments, when the first rotatable mechanism adjusts the first image collector 100 to face the left-side region of the vehicle, the first image collector 100 acquires images within a second angular range β. It is noted that the direction indicated by the arrow Al in FIGS. 1 and 2 is the forward direction of the vehicle, FIGS. 1 and 2 are only an example, and the first angular range and the second angular range are both angles set and calibrated by a technician based on the structure of the vehicle itself and the needs of the user. It should be further noted that the principle for the second rotatable mechanism and the second image collector is the same as that for the above-described first rotatable mechanism and the first image collector, and the present disclosure will not repeat it herein. A 360-degree panoramic camera may also be mounted at the front and rear of the vehicle body respectively. After splicing or other processing of the image on the left side of the vehicle captured by the first image collector, the image on the right side of the vehicle captured by the second image collector, and the images captured by the 360-degree panoramic cameras at the front and rear of the vehicle, a 360-degree panoramic bird's-eye view around the vehicle can be obtained, which enables the driver to have a clearer understanding of the conditions around the vehicle. When the first image collector and the second image collector are oriented to the left-rear region and the right-rear region of the vehicle respectively, the first image collector and the second image collector capture images within two lanes, three lanes or even more lanes of the left-rear region and the right-rear region of the vehicle. As a result, the driver keeps timely track of the traffic conditions in a wider field of view behind the vehicle, which improves driving safety.

In some embodiments, the device further includes a first display screen, a second display screen, and a third display screen. The first display screen is in signal communication with the first image collector and is used to display an image captured by the first image collector in the case that the first image collector is oriented toward the left-rear region of the vehicle. The second display screen is in signal communication with the second image collector and is used to display an image captured by the second image collector in the case that the first image collector is oriented toward the right-rear region of the vehicle. The third display screen is in signal communication with the first image collector and the second image collector, respectively, and is used to display an image captured by the first image collector in the case that the first image collector is oriented toward the left-side region of the vehicle and/or display an image captured by the second image collector in the case that the second image collector is oriented toward the right-side region of the vehicle. In this way, the driver keeps track of the traffic conditions in different regions around the vehicle through different screens, which enhances driving safety. Meanwhile, since either image collector is capable of capturing both the rear-view and side-view images of the vehicle, it not only increases the diversity of image collector functions, but also reduces the number of image collectors on the vehicle, thereby reducing the manufacturing cost of the vehicle.

In some embodiments, the first display screen, the second display screen, and the third display screen are mounted inside the vehicle. The first display screen is disposed in a left-side area of a driver. The second display screen is disposed in a right-side area of the driver. The third display screen is disposed in a center control area of the vehicle. It is understood that arranging the three display screens in accordance with the above-described positions can be more in line with the driving habits of the driver and facilitate the driver to observe the traffic conditions in different directions from the corresponding screens.

In some embodiments, the first display screen is mounted at a position on the dashboard close to the left-side window. The second display screen is mounted at a position on the dashboard close to the right-side window. The third display screen is the vehicle's center console display.

As can be seen from the above, the image acquisition device provided by the embodiments of the present disclosure acquires images from multiple angles around the vehicle by utilizing only two image collectors, and since the number of image collectors is less, it not only occupies less space on the vehicle but also reduces the manufacturing cost of the vehicle.

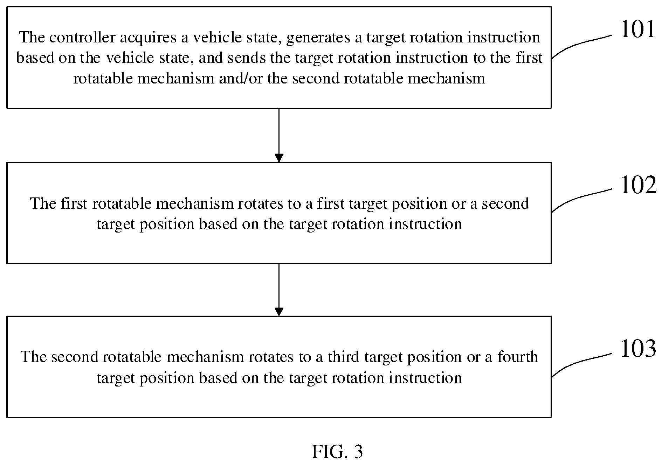

Embodiments of the present disclosure also provide a method for controlling the image acquisition device as described in any one of the foregoing embodiments, the method is applicable to a controller, wherein the image acquisition device includes a first image collector, a second image collector, a first rotatable mechanism and a second rotatable mechanism; wherein the first image collector is mounted on a left-side exterior of a vehicle body and connected to the first rotatable mechanism, the first rotatable mechanism being configured to adjust an orientation of the first image collector to switch between a left-rear region of a vehicle and a left-side region of the vehicle; and the second image collector is mounted on a right-side exterior of the vehicle body and connected to the second rotatable mechanism, the second rotatable mechanism being configured to adjust an orientation of the second image collector to switch between a right-rear region of the vehicle and a right-side region of the vehicle. The controller is in signal communication with the first rotatable mechanism and the second rotatable mechanism, respectively. FIG. 3 is a flowchart of a method for controlling an image acquisition device according to some embodiments of the present disclosure, and the method includes the following steps 101 to 103.

**In step 101, the controller acquires a vehicle state, generates a target rotation instruction based on the vehicle state, and sends the target rotation instruction to the first rotatable mechanism and/or the second rotatable mechanism.**

It should be noted that the vehicle state includes a running speed, a steering angle, a reversing state, a startup state, and a shutdown state of the vehicle. The statement that the controller is in signal communication with the first rotatable mechanism and the second rotatable mechanism respectively means that the controller can perform signal transmission with the first rotatable mechanism and the second rotatable mechanism respectively. The first rotatable mechanism and the second rotatable mechanism may be connected to the controller either over a network or via a hardwire. The controller in the embodiments of the present disclosure may be a vehicle control unit.

**In step 102, the first rotatable mechanism rotates to a first target position or a second target position based on the target rotation instruction.**

The first image collector is oriented toward the left-rear region of the vehicle in the case that the first rotatable mechanism rotates to the first target position, and the first image collector is oriented toward the left-side region of the vehicle in the case that the first rotatable mechanism rotates to the second target position. In this way, the controller flexibly adjusts the position of the first rotatable mechanism based on different vehicle states, thereby adjusting the image captured by the first image collector, which provides the driver with more appropriate images around the vehicle and enhances driving safety.

**In step 103, the second rotatable mechanism rotates to a third target position or a fourth target position based on the target rotation instruction.**

Wherein, the second image collector is oriented toward the right-rear region of the vehicle in the case that the second rotatable mechanism rotates to the third target position, and the second image collector is oriented toward the right-side region of the vehicle in the case that the second rotatable mechanism rotates to the fourth target position. In this way, the controller flexibly adjusts the position of the second rotatable mechanism based on different vehicle states, thereby adjusting the image captured by the second image collector, which provides the driver with more appropriate images around the vehicle and enhances driving safety.

It should be noted that the execution order of step 102 and step 103 may be changed. For example, step 102 is executed first, followed by step 103; alternatively, step 103 is executed first, and then step 102; or, step 102 and step 103 are executed simultaneously.

As can be seen from the above, by using the method for controlling the image acquisition device provided by the embodiments of the present disclosure, it is possible to flexibly adjust the images captured by the first image collector and the second image collector based on the vehicle state, which not only increases the diversity of image collector functions, but also reduces the number of image collectors on the vehicle, thereby reducing the manufacturing cost of the vehicle.

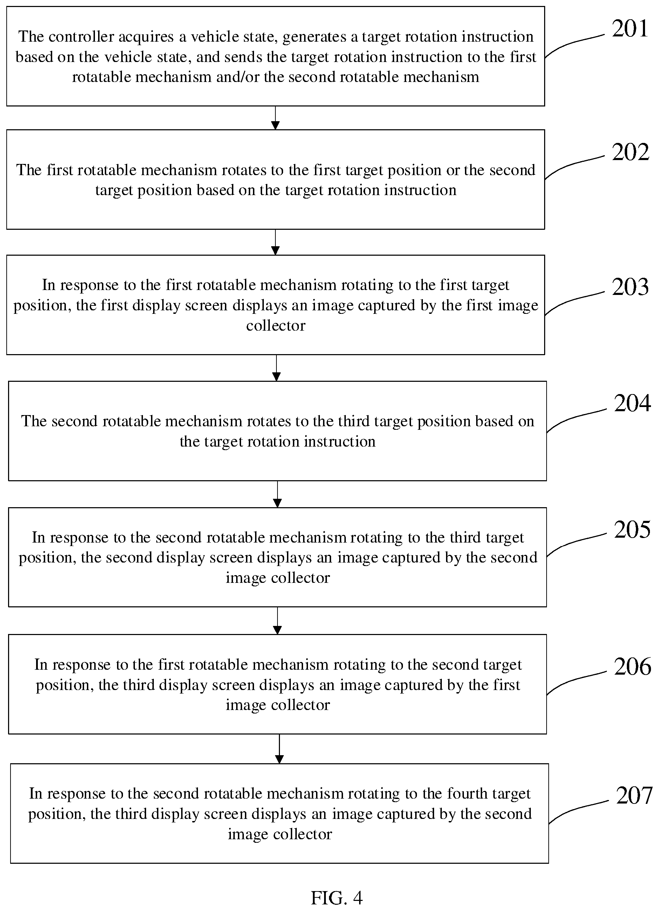

Embodiments of the present disclosure also provide a method for controlling the image acquisition device as described in any one of the foregoing embodiments, the method is applicable to a controller, wherein the image acquisition device includes a first image collector, a second image collector, a first rotatable mechanism and a second rotatable mechanism; wherein the first image collector is mounted on a left-side exterior of a vehicle body and connected to the first rotatable mechanism, the first rotatable mechanism being configured to adjust an orientation of the first image collector to switch between a left-rear region of a vehicle and a left-side region of the vehicle; and the second image collector is mounted on a right-side exterior of the vehicle body and connected to the second rotatable mechanism, the second rotatable mechanism being configured to adjust an orientation of the second image collector to switch between a right-rear region of the vehicle and a right-side region of the vehicle. The controller is in signal communication with the first rotatable mechanism and the second rotatable mechanism, respectively. FIG. 4 is a flowchart of a method for controlling an image acquisition device according to some embodiments of the present disclosure, and the method includes the following steps 201 to 207.

**In step 201, the controller acquires a vehicle state, generates a target rotation instruction based on the vehicle state, and sends the target rotation instruction to the first rotatable mechanism and/or the second rotatable mechanism.**

It should be noted that Step 201 is the same as Step 101 described above.

In some embodiments, in the case that the vehicle state includes a running speed of the vehicle, generating the target rotation instruction based on the vehicle state in step 201 includes the following two methods.

In a first type, the controller acquires the running speed and generates a first rotation instruction in response to the running speed being greater than a speed threshold, wherein the first rotation instruction is used to instruct the first rotatable mechanism to rotate to the first target position and/or instruct the second rotatable mechanism to rotate to the third target position. In the case that the running speed of the vehicle is high, the road conditions around the vehicle change rapidly, and the driver needs to pay more attention to a wider rearview of the vehicle to promptly keep track of the traffic or road conditions behind the vehicle. In this way, the method for controlling the image acquisition device according to the present disclosure provides the driver with more appropriate images based on the running speed of the vehicle, thereby enhancing driving safety.

In a second type, the controller generates a second rotation instruction based on the running speed being less than or equal to the speed threshold, wherein the second rotation instruction is used to instruct the first rotatable mechanism to rotate to the second target position and/or instruct the second rotatable mechanism to rotate to the fourth target position. In the case that the running speed of the vehicle is slow, the road conditions around the vehicle change slowly, and the driver is more likely to pay more attention to side-views of the vehicle to keep track of the traffic or road conditions around the vehicle. In this way, the method for controlling the image acquisition device according to the present disclosure provides the driver with more appropriate images based on the running speed of the vehicle, thereby enhancing driving safety.

It should be noted that the speed threshold may be set by the technician or can be adjusted based on the habits of the driver. For example, the speed threshold is 5 km/h.

In some embodiments, the controller acquires the running speed of the vehicle from the speed sensor. The speed sensor is in signal communication with the controller, for example, the speed sensor is connected to the controller over a network or a hardwire so as to transmit signals to each other. The speed sensor is a sensor that monitors the speed of the vehicle. The controller may acquire the running speed of the vehicle periodically or in real time.

In some embodiments, in the case that the vehicle state includes a steering angle of the vehicle, generating the target rotation instruction based on the vehicle state in step 201 includes the following two methods.

In a first type, the controller generates a third rotation instruction in response to the steering angle being less than a rotation threshold, wherein the third rotation instruction is used to instruct the first rotatable mechanism to rotate to the first target position and/or instruct the second rotatable mechanism to rotate to the third target position. In the case that the steering angle of the vehicle is small, the driver needs to pay more attention to the road conditions around the vehicle to avoid collision between the vehicle and the surrounding objects. The method for controlling the image acquisition device according to the present disclosure provides the driver with more appropriate images based on the steering angle of the vehicle, which facilitates the driver to complete turning maneuvers and enhance driving safety.

In a second type, the controller generates a fourth rotation instruction in response to the steering angle being greater than the rotation threshold, wherein the fourth rotation instruction is used to instruct the first rotatable mechanism to rotate to the second target position and/or instruct the second rotatable mechanism to rotate to the fourth target position. In the case that the steering angle of the vehicle is large, the vehicle is typically affected by the vehicles approaching vehicles from behind, and the method for controlling the image acquisition device according to the present disclosure ensures that the driver keeps track of the approaching vehicles from behind or road conditions, so as to complete turning maneuvers more safely, thereby enhancing the driving safety. It should be noted that the rotation threshold may be pre-set by technicians.

In some embodiments, the controller acquires the steering angle of the vehicle from the steering wheel sensor. The steering wheel sensor is in signal communication with the controller, for example, the steering wheel sensor is connected to the controller over a network or a hardwire so as to transmit signals to each other. The steering wheel sensor is a sensor that monitors the rotation angle of the steering wheel of the vehicle. There is a correlation between the rotation angle of the steering wheel and the steering angle of the vehicle body. The controller determines a current steering angle of the vehicle based on the rotation angle of the steering wheel sent by the steering wheel sensor and the correlation relationship between the rotation angle of the steering wheel and the steering angle of the vehicle body. The controller may acquire the steering angle of the steering wheel periodically or in real time.

In some embodiments, in the case that the vehicle state is in a reversing state, generating the target rotation instruction based on the vehicle state in step 201 includes the following method.

The controller generates a fifth rotation instruction in response to the vehicle being in the reversing state, wherein the fifth rotation instruction is used to instruct the first rotatable mechanism to rotate to a second target position and/or instruct the second rotatable mechanism to rotate to the fourth target position. In the case that the driver is in a reversing state, the vehicle operates at a slower speed and the movement space of the vehicle is restricted by surrounding objects. At this time, the images captured by the first image collector on the left side of the vehicle, the second image collector on the right side of the vehicle, and the 360-degree panoramic cameras at the front and rear of the vehicle are spliced or otherwise processed to obtain a 360-degree panoramic bird's-eye view of the vehicle axle. This enables the driver comprehensively keeps track of the current position of the vehicle and the surrounding situations, so as to park the vehicle in more securely. By rotating the first rotatable mechanism and the second rotatable mechanism based on the reversing state of the vehicle, the image acquisition device timely adjusts the captured images of the first image collector and the second image collector, preventing collisions between the vehicle and the surrounding objects.

In some embodiments, in the case that the vehicle state is in a state immediately after startup, generating the target rotation instruction based on the vehicle state in step 201 includes the following method.

The controller generates a sixth rotation instruction in response to the vehicle being in the state immediately after startup, wherein the sixth rotation instruction is used to instruct the first rotatable mechanism to rotate to the first target position and/or instruct the second rotatable mechanism to rotate to the third target position. In general, the driver starts the vehicle and then quickly enters the lane to drive, and the speed of the vehicle is faster, so providing the driver with the traffic conditions in the rear region of the vehicle is more conducive to the driving safety.

In some embodiments, generating the target rotation instruction based on the vehicle state in step 201 includes the following method.

The controller generates a seventh rotation instruction in response to a first switch operation. The seventh rotation instruction is used to instruct the first rotatable mechanism to rotate to the first target position and/or instruct the second rotatable mechanism to rotate to the third target position.

Alternatively, the controller generates an eighth rotation instruction in response to a second switch operation. The eighth rotation instruction is used to instruct the first rotatable mechanism to rotate to the second target position and/or instruct the second rotatable mechanism to rotate to the fourth target position.

The first switch operation and the second switch operation are operations performed by the user to switch the captured image of the image controller. For example, a switch button is provided on the steering wheel, the center console screen, or other locations of the vehicle, and the controller responds to the user's trigger operation such as pressing or clicking the switch button. The switch button switches the captured image of the first image collector and the second image collector from the left-side region and the right-side region of the vehicle to the left-rear region and right-rear region of the vehicle. Thus, the method for controlling the image collector according to the embodiments of the present disclosure enables adjustment of the capture scope of the image collectors based on the user's needs, which improves the user's driving experience.

In some embodiments, generating the target rotation instruction based on the vehicle state in step 201 includes the following method.

The controller generates an eighth rotation instruction in response to the vehicle being in the shutdown state, wherein the eighth rotation instruction is used to instruct the first rotatable mechanism to rotate to the first target position and/or instruct the second rotatable mechanism to rotate to the third target position.

**In step 202, the first rotatable mechanism rotates to the first target position or the second target position based on the target rotation instruction.**

Step 202 is the same as step 102 in the above embodiment. There is a correlation between the first target position and the first angular range of the first image collector, and there is a correlation between the second target position and the second angular range of the first image collector.

**In step 203, in response to the first rotatable mechanism rotating to the first target position, the first display screen displays an image captured by the first image collector.**

In some embodiments, the first display screen is in signal communication with the first image collector. The first image collector, in response to the first rotatable mechanism rotating to the first target position, sends an image captured by the first image collector to the first display screen.

In some other embodiments, the first display screen is in signal communication with the controller, and the first image collector is in signal communication with the controller. The first image collector, in response to the first rotatable mechanism rotating to the first target position, sends the image captured by the first image collector to the controller, and the controller sends the received image to the first display screen.

**In step 204, the second rotatable mechanism rotates to the third target position based on the target rotation instruction.**

Step 204 is the same as step 103 in the above embodiment. The third target position and the fourth target position are each associated with an angular range of the second image collector.

**In step 205, in response to the second rotatable mechanism rotating to the third target position, the second display screen displays an image captured by the second image collector.**

In some embodiments, the second display screen is in signal communication with the second image collector. The second image collector, in response to the second rotatable mechanism rotating to the third target position, sends the image captured by the second image collector to the second display screen.

In some other embodiments, the second display screen is in signal with the controller, and the second image collector is in signal with the controller. The second image collector, in response to the second rotatable mechanism rotating to the third target position, sends the image captured by the second image collector to the controller, and the controller sends the received image to the second display screen.

**In step 206, in response to the first rotatable mechanism rotating to the second target position, the third display screen displays an image captured by the first image collector.**

It should be noted that the principle of the third display screen displaying the image captured by the first image collector is the same as that in step 203 and will not be repeated here.

**In step 207, in response to the second rotatable mechanism rotating to the fourth target position, the third display screen displays an image captured by the second image collector.**

It should be noted that the principle of the third display screen displaying the image captured by the first image collector is the same as that in step 205 and will not be repeated here.

In some embodiments, the third display screen displays a 360-degree panoramic bird's-eye view image of the vehicle synthesized from images captured by the first image collector, the second image collector, and the 360-degree panoramic cameras at the front and rear of the vehicle.

In some embodiments, when the first rotatable mechanism is switched from the first target position to the second target position, the first display screen displays the image captured by the first image collector before the switching, and the third display screen shows the image captured by the first image collector after the switching. When the first rotatable mechanism is switched from the second target position to the first target position, the first display screen displays the image captured by the first image collector after the switching, and the third display screen displays no image or displays the image captured by the first image collector before the switching. This avoids displaying the same images simultaneously on different display screens, preventing interference with the driver's observation and enhancing driving safety.

In some embodiments, when the second rotatable mechanism is switched from the third target position to the fourth target position, the second display screen displays the image captured by the second image collector before the switching, and the third display screen shows the image captured by the second image collector after the switching. When the second rotatable mechanism is switched from the fourth target position to the third target position, the second display screen displays the image captured by the second image collector after the switching, and the third display screen displays no image or displays the image captured by the second image collector before the switching. This avoids displaying the same images simultaneously on different display screens, preventing interference with the driver's observation and enhancing driving safety.

It should be noted that the execution order of the plurality of steps described above may be adjusted according to demand.

As can be seen from the above, the method for controlling the image acquisition device according to the embodiments of the present disclosure timely switches the orientation of the first image acquisition device between the left-rear region of the vehicle and the left-side region of the vehicle and switch the orientation of the second image acquisition device between the right-rear region of the vehicle and the right-side region of the vehicle based on the running speed, steering angle, reversing state, start-up state and shutdown state of the vehicle, thereby providing the driver with more appropriate images of the traffic conditions to improve the driving safety.

Embodiments of the present disclosure provide a vehicle, the vehicle includes a controller and the image acquisition device as described in any one of the foregoing embodiments. The image acquisition device has the same composition of components as the image acquisition device in the foregoing embodiments as well as the functions of the components, and the method for controlling the image acquisition device as described in the foregoing embodiments can be realized between the image acquisition device and the controller of the vehicle, the controller being configured to control the image acquisition device.

The image acquisition device includes: a first image collector, a second image collector, a first rotatable mechanism and a second rotatable mechanism; wherein the first image collector is mounted on a left-side exterior of a vehicle body and connected to the first rotatable mechanism, the first rotatable mechanism being configured to adjust an orientation of the first image collector to switch between a left-rear region of a vehicle and a left-side region of the vehicle; and the second image collector is mounted on a right-side exterior of the vehicle body and connected to the second rotatable mechanism, the second rotatable mechanism being configured to adjust an orientation of the second image collector to switch between a right-rear region of the vehicle and a right-side region of the vehicle. The image acquisition device acquires images from multiple angles around the vehicle by utilizing only two image collectors, and since the number of image collectors is less, it not only occupies less space on the vehicle but also reduces the manufacturing cost of the vehicle.

In some embodiments, the image acquisition device further includes a first display screen, a second display screen, and a third display screen. The first display screen is in signal communication with the first image collector and is used to display an image captured by the first image collector in a case where the first image collector is oriented toward the left-rear region of the vehicle. The second display screen is in signal communication with the second image collector and is used to display an image captured by the second image collector in a case where the first image collector is oriented toward the right-rear region of the vehicle. The third display screen is in signal communication with the first image collector and the second image collector, respectively, and is used to display an image captured by the first image collector in a case where the first image collector is oriented toward the left-side region of the vehicle and/or display an image captured by the second image collector in a case where the second image collector is oriented toward the right-side region of the vehicle. In this way, the driver keeps track of the traffic conditions in different regions around the vehicle through different screens, which enhances driving safety. Meanwhile, since either image collector is capable of capturing both the rear-view and side-view images of the vehicle, it not only increases the diversity of image collector functions, but also reduces the number of image collectors on the vehicle, thereby reducing the manufacturing cost of the vehicle.

In some embodiments, the first display screen, the second display screen, and the third display screen are mounted inside the vehicle. The first display screen is disposed in a left-side area of a driver. The second display screen is disposed in a right-side area of the driver. The third display screen is disposed in a center control area of the vehicle. It is understood that arranging the three display screens in accordance with the above-described positions can be more in line with the driving habits of the driver and facilitate the driver to observe the traffic conditions in different directions from the corresponding display screens.

In some embodiments, the controller is configured to acquire a vehicle state, generate a target rotation instruction based on the vehicle state, and send the target rotation instruction to the first rotatable mechanism and/or the second rotatable mechanism.

The first rotatable mechanism is configured to rotate to a first target position or a second target position based on the target rotation instruction, wherein the first image collector is oriented toward the left-rear region of the vehicle in a case where the first rotatable mechanism rotates to the first target position, and the first image collector is oriented toward the left-side region of the vehicle in a case where the first rotatable mechanism rotates to the second target position.

The second rotatable mechanism is configured to rotate to a third target position or a fourth target position based on the target rotation instruction, wherein the second image collector is oriented toward the right-rear region of the vehicle in a case where the second rotatable mechanism rotates to the third target position, and the second image collector is oriented toward the right-side region of the vehicle in a case where the second rotatable mechanism rotates to the fourth target position.

By the combination of the controller, the first rotatable mechanism and/or the second rotatable mechanism, it is possible to flexibly adjust the images captured by the first image collector and the second image collector based on the vehicle state, which not only increases the diversity of image collector functions, but also reduces the number of image collectors on the vehicle, thereby reducing the manufacturing cost of the vehicle.

In some embodiments, the vehicle state includes a running speed of the vehicle, the controller is further configured to: acquire the running speed; generate a first rotation instruction in response to the running speed being greater than a speed threshold, wherein the first rotation instruction is used to instruct the first rotatable mechanism to rotate to the first target position and/or instruct the second rotatable mechanism to rotate to the third target position; and generate a second rotation instruction in response to the running speed being less than or equal to the speed threshold, wherein the second rotation instruction is used to instruct the first rotatable mechanism to rotate to the second target position and/or instruct the second rotatable mechanism to rotate to the fourth target position. In this way, the driver is provided with more appropriate images based on the running speed of the vehicle, thereby enhancing driving safety.

In some embodiments, the vehicle state includes a steering angle of the vehicle, and the controller is further configured to: generate a third rotation instruction in response to the steering angle being less than a rotation threshold, wherein the third rotation instruction is used to instruct the first rotatable mechanism to rotate to the first target position and/or instruct the second rotatable mechanism to rotate to the third target position; and generate a fourth rotation instruction in response to the steering angle being greater than the rotation threshold, wherein the fourth rotation instruction is used to instruct the first rotatable mechanism to rotate to the second target position and/or instruct the second rotatable mechanism to rotate to the fourth target position. In this way, the driver keeps track of the approaching vehicles from behind or road conditions, so as to complete turning maneuvers more safely, thereby enhancing driving safety.

In some embodiments, the controller is configured to generate a fifth rotation instruction in response to the vehicle being in a reversing state, wherein the fifth rotation instruction is used to instruct the first rotatable mechanism to rotate to the second target position and/or instruct the second rotatable mechanism to rotate to the fourth target position. When the vehicle is in reversing state, it enables the driver to have a comprehensive understanding of the current position of the vehicle and the surrounding conditions, thereby preventing collisions between the vehicle and surrounding objects.

In some embodiments, the controller is configured to generate a sixth rotation instruction in response to the vehicle being in a state immediately after startup, wherein the sixth rotation instruction is used to instruct the first rotatable mechanism to rotate to the first target position and/or instruct the second rotatable mechanism to rotate to the third target position. In general, the driver starts the vehicle and then quickly enters the lane to drive, and the speed of the vehicle is faster, so providing the driver with the traffic conditions in the rear region of the vehicle is more conducive to driving safety.

In some embodiments, the controller is configured to control a first display screen to display an image captured by the first image collector in response to the first rotatable mechanism rotating to the first target position; and to control a second display screen to display an image captured by the second image collector in response to the second rotatable mechanism rotating to the third target position. In this way, it can timely display images from different regions to the driver, thereby enhancing driving safety.

The vehicle acquires the rear-view and side-view images of the vehicle by installing only two image collectors. It not only increases the diversity of image collector functions, but also reduces the number of image collectors on the vehicle, thereby reducing the manufacturing cost of the vehicle.

In the present disclosure, the terms "first" and "second" are used for descriptive purposes only and are not to be understood as indicating or implying relative importance. The term "plurality" refers to two or more, unless otherwise expressly limited.

Other embodiments of the present disclosure will readily come to mind to those skilled in the art upon consideration of the specification and practice of the present disclosure as disclosed herein. The present disclosure is intended to cover any variations, uses, or adaptations that follow the general principles of the present disclosure and include common knowledge or customary technical means in the art not disclosed herein. The specification and embodiments are to be considered exemplary only.

It should be understood that the present disclosure is not limited to the precise structure which has been described above and illustrated in the accompanying drawings, and that various modifications and changes may be made without departing from its scope. The scope of this disclosure is limited only by the appended claims.

## Claims

1. An image acquisition device, comprising: a first image collector, a second image collector, a first rotatable mechanism, and a second rotatable mechanism; wherein
the first image collector is mounted on a left-side exterior of a vehicle body and connected to the first rotatable mechanism, the first rotatable mechanism being configured to adjust an orientation of the first image collector to switch between a left-rear region of a vehicle and a left-side region of the vehicle; and
the second image collector is mounted on a right-side exterior of the vehicle body and connected to the second rotatable mechanism, the second rotatable mechanism being configured to adjust an orientation of the second image collector to switch between a right-rear region of the vehicle and a right-side region of the vehicle.

2. The image acquisition device according to claim 1, further comprising a first display screen, a second display screen, and a third display screen;
the first display screen is in signal communication with the first image collector and is used to display an image captured by the first image collector in a case where the first image collector is oriented toward the left-rear region of the vehicle;
the second display screen is in signal communication with the second image collector and is used to display an image captured by the second image collector in a case where the first image collector is oriented toward the right-rear region of the vehicle; and
the third display screen is in signal communication with the first image collector and the second image collector, and is used to display an image captured by the first image collector in a case where the first image collector is oriented toward the left-side region of the vehicle and/or an image captured by the second image collector in a case where the second image collector is oriented toward the right-side region of the vehicle.

3. The image acquisition device according to claim 2, wherein the first display screen, the second display screen, and the third display screen are mounted inside the vehicle; wherein
the first display screen is disposed in a left-side area of a driver;
the second display screen is disposed in a right-side area of the driver; and
the third display screen is disposed in a center control area of the vehicle.

4. A method for controlling an image acquisition device, wherein the image acquisition device comprises: a first image collector, a second image collector, a first rotatable mechanism, and a second rotatable mechanism; wherein the first image collector is mounted on a left-side exterior of a vehicle body and connected to the first rotatable mechanism, the first rotatable mechanism being configured to adjust an orientation of the first image collector to switch between a left-rear region of a vehicle and a left-side region of the vehicle; and the second image collector is mounted on a right-side exterior of the vehicle body and connected to the second rotatable mechanism, the second rotatable mechanism being configured to adjust an orientation of the second image collector to switch between a right-rear region of the vehicle and a right-side region of the vehicle;
the controller is in signal communication with the first rotatable mechanism and the second rotatable mechanism;
the method is applicable to a controller, and comprises:
acquiring a vehicle state, generating a target rotation instruction based on the vehicle state, and sending the target rotation instruction to the first rotatable mechanism and/or the second rotatable mechanism;
wherein in response to the target rotation instruction:
the first rotatable mechanism rotates to a first target position or a second target position, wherein the first image collector is oriented toward the left-rear region of the vehicle in a case where the first rotatable mechanism rotates to the first target position, and the first image collector is oriented toward the left-side region of the vehicle in a case where the first rotatable mechanism rotates to the second target position; and
the second rotatable mechanism rotates to a third target position or a fourth target position, wherein the second image collector is oriented toward the right-rear region of the vehicle in a case where the second rotatable mechanism rotates to the third target position, and the second image collector is oriented toward the right-side region of the vehicle in a case where the second rotatable mechanism rotates to the fourth target position.

5. The method according to claim 4, wherein the vehicle state comprises a running speed of the vehicle, and generating the target rotation instruction based on the vehicle state comprises:
acquiring the running speed;
generating a first rotation instruction in response to the running speed being greater than a speed threshold, wherein the first rotation instruction is used to instruct the first rotatable mechanism to rotate to the first target position and/or instruct the second rotatable mechanism to rotate to the third target position; or
generating a second rotation instruction in response to the running speed being less than or equal to the speed threshold, wherein the second rotation instruction is used to instruct the first rotatable mechanism to rotate to the second target position and/or instruct the second rotatable mechanism to rotate to the fourth target position.

6. The method according to claim 4, wherein the vehicle state comprises a steering angle of the vehicle, and generating the target rotation instruction based on the vehicle state comprises:
generating a third rotation instruction in response to the steering angle being less than a rotation threshold, wherein the third rotation instruction is used to instruct the first rotatable mechanism to rotate to the first target position and/or instruct the second rotatable mechanism to rotate to the third target position; or
generating a fourth rotation instruction in response to the steering angle being greater than the rotation threshold, wherein the fourth rotation instruction is used to instruct the first rotatable mechanism to rotate to the second target position and/or instruct the second rotatable mechanism to rotate to the fourth target position.

7. The method according to claim 4, wherein generating the target rotation instruction based on the vehicle state comprises:
generating a fifth rotation instruction in response to the vehicle being in a reversing state, wherein the fifth rotation instruction is used to instruct the first rotatable mechanism to rotate to the second target position and/or instruct the second rotatable mechanism to rotate to the fourth target position.

8. The method according to claim 4, wherein generating the target rotation instruction based on the vehicle state comprises:
generating a sixth rotation instruction in response to the vehicle being in a state immediately after startup, wherein the sixth rotation instruction is used to instruct the first rotatable mechanism to rotate to the first target position and/or instruct the second rotatable mechanism to rotate to the third target position.

9. The method according to claim 4, further comprising:
displaying, on a first display screen, an image captured by the first image collector in response to the first rotatable mechanism rotating to the first target position; and
displaying, on a second display screen, an image captured by the second image collector in response to the second rotatable mechanism rotating to the third target position.

10. A vehicle, comprising: an image acquisition device and a controller configured to control the image acquisition device, wherein the image acquisition device comprises:
a first image collector, a second image collector, a first rotatable mechanism, and a second rotatable mechanism; wherein the first image collector is mounted on a left-side exterior of a vehicle body and connected to the first rotatable mechanism, the first rotatable mechanism being configured to adjust an orientation of the first image collector to switch between a left-rear region of a vehicle and a left-side region of the vehicle; and the second image collector is mounted on a right-side exterior of the vehicle body and connected to the second rotatable mechanism, the second rotatable mechanism being configured to adjust an orientation of the second image collector to switch between a right-rear region of the vehicle and a right-side region of the vehicle.

11. The vehicle according to claim 1, wherein the image acquisition device further comprises a first display screen, a second display screen, and a third display screen;
wherein the first display screen is in signal communication with the first image collector and is used to display an image captured by the first image collector in a case where the first image collector is oriented toward the left-rear region of the vehicle;
the second display screen is in signal communication with the second image collector and is used to display an image captured by the second image collector in a case where the first image collector is oriented toward the right-rear region of the vehicle; and
the third display screen is in signal communication with the first image collector and the second image collector, respectively, and is used to display an image captured by the first image collector in a case where the first image collector is oriented toward the left-side region of the vehicle and/or an image captured by the second image collector in a case where the second image collector is oriented toward the right-side region of the vehicle.

12. The vehicle according to claim 11, wherein the first display screen, the second display screen, and the third display screen are mounted inside the vehicle; wherein
the first display screen is disposed in a left-side area of a driver;
the second display screen is disposed in a right-side area of the driver; and
the third display screen is disposed in a center control area of the vehicle.

13. The vehicle according to claim 10, wherein
the controller is configured to acquire a vehicle state, generate a target rotation instruction based on the vehicle state, and send the target rotation instruction to the first rotatable mechanism and/or the second rotatable mechanism;
the first rotatable mechanism is configured to rotate to a first target position or a second target position in response to the target rotation instruction, wherein the first image collector is oriented toward the left-rear region of the vehicle in a case where the first rotatable mechanism rotates to the first target position, and the first image collector is oriented toward the left-side region of the vehicle in a case where the first rotatable mechanism rotates to the second target position; and
the second rotatable mechanism is configured to rotate to a third target position or a fourth target position in response to the target rotation instruction, wherein the second image collector is oriented toward the right-rear region of the vehicle in a case where the second rotatable mechanism rotates to the third target position, and the second image collector is oriented toward the right-side region of the vehicle in a case where the second rotatable mechanism rotates to the fourth target position.

14. The vehicle according to claim 13, wherein the vehicle state comprises a running speed of the vehicle, the controller is further configured to:
acquire the running speed;
generate a first rotation instruction in response to the running speed being greater than a speed threshold, wherein the first rotation instruction is used to instruct the first rotatable mechanism to rotate to the first target position and/or instruct the second rotatable mechanism to rotate to the third target position; or
generate a second rotation instruction in response to the running speed being less than or equal to the speed threshold, wherein the second rotation instruction is used to instruct the first rotatable mechanism to rotate to the second target position and/or instruct the second rotatable mechanism to rotate to the fourth target position.

15. The vehicle according to claim 13, wherein the vehicle state comprises a steering angle of the vehicle, and the controller is further configured to:
generate a third rotation instruction in response to the steering angle being less than a rotation threshold, wherein the third rotation instruction is used to instruct the first rotatable mechanism to rotate to the first target position and/or instruct the second rotatable mechanism to rotate to the third target position; or
generate a fourth rotation instruction in response to the steering angle being greater than the rotation threshold, wherein the fourth rotation instruction is used to instruct the first rotatable mechanism to rotate to the second target position and/or instruct the second rotatable mechanism to rotate to the fourth target position.
